# EUROPEAN PATENT SPECIFICATION

(11) **EP 1 632 014 B1**
(45) Date of publication and mention of the grant of the patent: **13.04.2011**
(21) Application number: 04734335.5
(22) Date of filing: 21.05.2004
(51) Int. Cl.: H02K 7/14

(54) **A MULTI-PURPOSE MACHINE WITH TWO OPERATING DEVICES ACTUATED BY A SINGLE ELECTRIC MOTOR**
MEHRZWECKMASCHINE MIT ZWEI DURCH EINEN EINZELNEN ELEKTROMOTOR ANGETRIEBENEN VORRICHTUNGEN
MACHINE POLYVALENTE A DEUX DISPOSITIFS DE COMMANDE ACTIONNES PAR UN SEUL MOTEUR ELECTRIQUE

(30) Priority: 03.06.2003 IT CR20030008
(43) Date of publication of application: 08.03.2006
(73) Proprietor: Pedrazzini Bertolazzi, Marino, 26100 Cremona (IT)
(72) Inventor: Pedrazzini Bertolazzi, Marino, 26100 Cremona (IT)
(74) Representative: Marcio', Paola
(86) International application number: PCT/IT2004/000292
(87) International publication number: WO 2004/107534

(56) References cited:
- GB-A- 2 060 087
- GB-A- 2 073 827
- US-A- 5 046 927
- US-A1- 2003 129 065
- US-B1- 6 351 870

## Description

The present invention relates to electric-powered machines like air compressors, vacuum cleaners, high pressure water pumps or high-pressure water cleaners, for domestic use, do-it-yourself, or professional use.

A particular reference is made to air compressors and high-pressure water cleaners, that are widely used for many tasks such as cleaning of large surfaces, washing of motor vehicles, or any other job requiring a compressed air or a high-pressure water jet.

Generally speaking, these air compressors essentially comprise an air tank, a volumetric compressor and an electric motor with a direct connection or, especially in professional items, with a belt drive transmission. Water cleaners are generally equipped with a high-pressure piston pump, normally with three or more pistons; the pistons may be aligned and actuated by an eccentric shaft, or arranged in a circumference and actuated by a wobble plate.

The motor is generally an inductive or brush electric motor, with a power of a few kW.

In most cases, workshops, small companies, and also domestic or do-it-yourself users feel the need of at least one air compressor and one high-pressure water pump, and often of other machines such as a vacuum cleaner or a wet vacuum cleaner. Of course, the purchase of two or more machines of this type gives some problems of cost and space.

It can be understood that it would be very attractive to provide a multi-purpose machine featuring a single electric motor together with two different operating devices, for example a compressor and a high-pressure water pump.

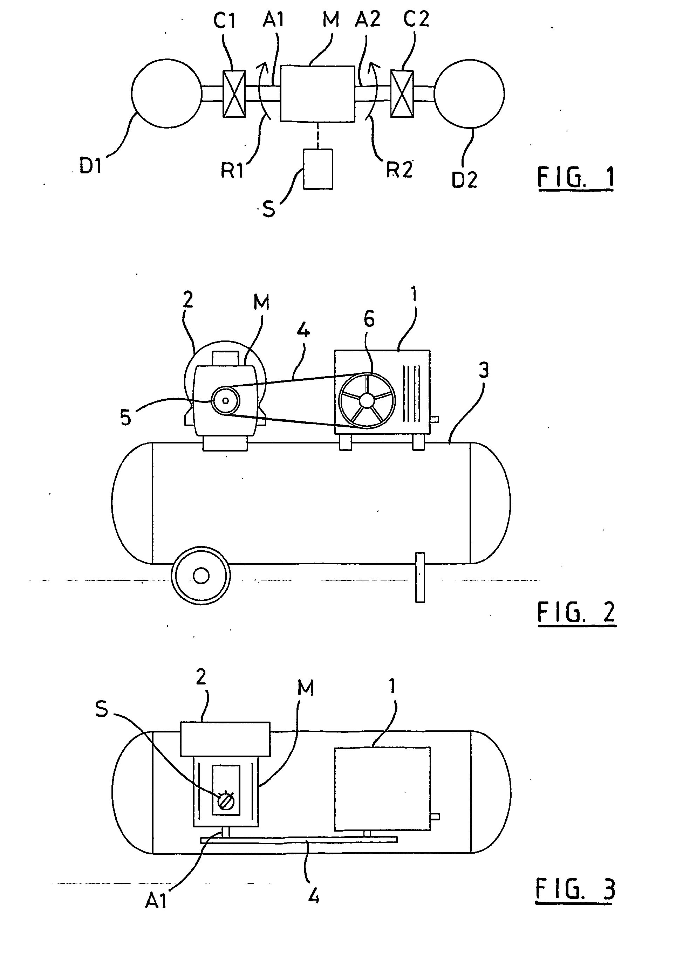

US 6351870 B1 discloses a multi-purpose machine incorporating a drive motor M driving a first and a second D1, D2 operating devices by means of drive shafts A1, A2 whose directions of rotation R1, R2 are changed by means of control means S. The combined machine being provided with coupling means C1, C2 between said shafts and operating devices which permit rotational coupling to occur in only one direction of rotation. See Fig. 1. state of the art.

However, a similar machine creates further problems, mainly because the devices are operated by the same motor, and the idling of a device, when the other is used, must be avoided. Referring to the above example, if the piston pump were running even when the air compressor is used, and vice-versa, this would result in a rapid wear out of the components and greater energy consumption.

It has to be noted that this disadvantage is to be overcome with very simple and low-cost means, in order not to nullify the economic advantage from substituting two machines with a single one.

Thus, the aim of the invention is to realize a multi-purpose machine for domestic, hobby or professional use, comprising two operating devices, particularly an air compressor or a vacuum cleaner together with a high-pressure pump, actuated selectively and independently by a single electric motor, using very simple and low-cost means.

This aim is achieved by a multi-purpose machine according to claim 1.

Further embodiments of the invention are claimed in the dependent claims.

The main advantage of the invention is that the user can selectively and independently run the first or the second device, at its choice, simply by reversing the rotation direction of the motor.

The invention is now disclosed in a greater detail, with particular reference to a preferred application, which is that of realizing a multi-purpose machine featuring an air compressor and a high-pressure pump, with the aid of the figures, wherein:
Fig. 1 is an essential diagram of the state of the art;
Figs. 2 and 3 are respectively a schematic side view and a schematic top view of a machine according to the invention, comprising a compressor and a high-pressure piston pump

Referring to the general scheme of Fig. which refers to a known multi-purpose machine comprising an electric motor M and two operating devices, that is a first operating device D1 and a second operating device D2, actuated by said motor M.

The motor M has a motor shaft with a first terminal part A1 and a second terminal part A2, protruding from two opposite sides of the motor. The first operating device D1 and the second operating device D2 are respectively connected to said first terminal part A1 and second terminal part A2.

The motor M is connected to means for reversing the rotation direction of the motor shaft, which means is advantageously realized with a selector S inverting the supply phase.

The first device D1 is connected to the first terminal part of the motor shaft A1 through unidirectional coupling means C1, engaging and transmitting torque in a first direction of rotation R1, but allowing idling in the opposite direction. The second device D2 is connected to the second terminal part A2 through further unidirectional coupling means C2, engaging and transmitting torque in the direction of rotation R2 opposite to said first direction R1.

Said unidirectional coupling means C1 and C2 comprise a first freewheel, connecting the device D1 to the terminal part A1, and a second freewheel, connecting the device D2 to the terminal part A2.

Other equivalent unidirectional coupling means may be used: another embodiment, for example, provides for a magnetic clutch friction instead of at least one of the freewheels C 1 and C2.

The invention is preferably but not exclusively suited for a multi-purpose machine wherein the first operating device is a compressor and the second operating device is a high-pressure water pump.

A practical example of such a machine is given in Figs. 2 and 3. In addition to the motor M, the machine comprises a compressor 1, a piston pump 2, a compressed air tank 3.

Both the compressor 1 and the piston pump 2 are connected to the respective terminal parts of the motor shaft through a freewheel. The freewheel of the compressor and the freewheel of the pump are adapted to transmit torque in opposite directions.

The compressor 1 is operated by the motor M through a belt drive 4 connecting two pulleys 5 and 6, that are respectively keyed onto the first terminal part A1 of the motor M and onto the shaft of the compressor.

The freewheel of the compressor is advantageously interposed between the terminal part A1 and the pulley 5, so that the motor M can drive the pulley 5 in one rotation direction only.

The pump 2 is screwed directly onto the motor M, thereby creating a single body therewith. In this way, as illustrated in figures 2 and 3, overall dimensions of the machine are about the same as those of a commercially available compressor, thus also reducing costs.

The pump 2 is of the type with a wobble plate that actuates the pistons. In this case, the freewheel of the pump may be inserted into the wobble plate. In practice, it is possible for example to bore the wobble plate of a commercially available pump, to obtain the seat for mounting the freewheel.

Insertion of the freewheel into the wobble plate gives the following advantages: the motor-pump alignment is made easier; overall dimensions are reduced; the lubricant of the pump can act also on the freewheel itself; savings in time and cost for assembling are obtained.

According to a preferred embodiment the wobble plate actuates the pistons of the pump by means of a first axial thrust bearing, and a load spring is provided that keeps said bearing in contact with the wobble plate.

According to a further preferred embodiment, a second thrust bearing is provided, behind the freewheel of the pump, on the opposite side of the above mentioned first thrust bearing. Said second thrust bearing is provided to avoid that the thrust of the spring causes the freewheel to be dragged also in the idle direction of rotation.

According to another embodiment (not shown), the compressor and the pump are mounted adjacent, on the same side of the motor: in this case, said second thrust bearing is particularly advantageous, because the freewheel of the compressor and the freewheel of the pump are rather close together, and there may be some mechanical contact between them, with the consequence that the compressor could be running even when the motor M is driving the pump, or vice versa.

If the pump 2 is a piston pump with eccentric shaft, the freewheel can be mounted between the terminal part of the motor and the shaft of the pump, instead of the rigid tongue connection that is normally used.

The compressor 1 can also be connected to the motor M in a different way; for example, it can be monobloc. In a further embodiment (not shown), the compressor is coaxial to the motor M, with the freewheel being fixed to the motor shaft and to the eccentric of the compressor.

The motor M is normally a brush motor, an inductive motor, or a Hall-effect motor. For silent operation, a low-rpm motor together with an overdrive, in accordance with the italian patent application no. CR2002A000005 of the same applicant, may be used.

According to the invention, the user may choose to run the compressor 1 or the pump 2 simply acting on the selector S that reverses the rotation direction of the motor M.

when the motor M is running, only one of the two freewheels C1 and C2 is engaged, whilst the other remains idle. The user has a multi-function and multi-use machine, passing from one function to the other by simply switching a selector.

The invention is not limited to the illustrated example, but is subject to many different applications and enables to realize a vast range of multi-purpose machines, particularly in the field of fluid machines such as compressors, pumps or vacuum cleaners, in the field of domestic and industrial cleaning machines, in the field of tools, domestic appliances, do-it-yourself, and so on. As an example, other applications may cover a a machine comprising a high-pressure pump and a tool such as a disc grinder.

## Claims

1. A multi-purpose machine comprising an electric motor (M), a first operating device (D1) and a second operating device (D2) actuated by said motor (M), wherein said motor (M) has a shaft with a first terminal part (A1) and a second terminal part (A2) opposite to said first terminal part (A1) to which said devices are respectively connected, wherein:
- the motor (M) is connected to means (S) suitable for reversing the direction of rotation of the motor shaft;
- the first device (D1) is connected to the first terminal part of the motor shaft (A1) through unidirectional coupling means (C1), transmitting torque in a first direction of rotation (R1) only;
- the second device (D2) is connected to the second terminal part of the motor shaft (A2) through further unidirectional coupling means (C2), transmitting torque in the direction of rotation (R2) opposite to said first direction (R1), and:
said second operating device (D2) is a high-pressure piston pump (2), and said pump (2) is a piston pump with a wobble plate actuating the pistons, **characterised in that** the coupling means between the pump (2) and the motor (M) comprises a freewheel directly associated with the wobble plate of the pump.

2. A machine according to claim 1, **characterised in that** the wobble plate of the pump (2) comprises a bored seat for mounting the freewheel, so that said freewheel of the pump (2) is inserted into the wobble plate.

3. A machine according to claim 1 or 2, **characterised in that** it comprises a first thrust bearing between the wobble plate and the pistons of the pump (2), and a second thrust bearing next to the freewheel associated with said wobble plate.

4. A machine according to any one of claims 1 to 3, **characterised in that** the coupling means of said first device (D1) comprises a magnetic clutch.

5. A machine according to any one of preceding claims, **characterised in that** said first device (1) is an air compressor.

6. A machine according to any one of preceding claims, **characterised in that** said first device (1) is a vacuum cleaner.

7. A machine according to any one of preceding claims, **characterised in that** the connection means between
said first device (1) and the corresponding terminal part (A1) of the motor shaft comprises a belt drive transmission with a belt (4) connecting a driving pulley (5) to a driven pulley (6), and a freewheel which is associated with said driving pulley (5).

## Patentansprüche

1. Mehrzweckmaschine, bestehend aus einem Elektromotor (M), aus einer ersten Betätigungsvorrichtung (D1) und einer zweiten Betätigungsvorrichtung (D2), die von genanntem Motor (M) angetrieben sind, worin genannter Motor (M) eine Antriebswelle mit einem ersten Endteil (A1) und einem dem genannten ersten Endteil (A1) entgeangesetzten zweiten Endteil (A2) hat, an welche die genannten Vorrichtungen jeweils angeschlossen sind, worin:
- der Motor (M) mit geeigneten Mitteln (S) zum Umkehren der Drehrichtung der Antriebswelle verbunden ist;
- die erste Vorrichtung (D1) mit dem ersten Endteil der Antriebswelle (A1) durch einseitig gerichtete Ankopplungsmittel (C1) verbunden ist, welche die Drehkraft nur in eine erste Drehrichtung (R1) übertragen;
- die zweite Vorrichtung (D2) mit dem zweiten Endteil der Antriebswelle (A2) durch weitere einseitig gerichtete Ankopplungsmittel (C2) verbunden ist, welche die Drehkraft in eine der genannten ersten Drehrichtung (R1) entgegengesetzte Drehrichtung (R2) übertragen, und
genannte zweite Betätigungsvorrichtung (D2) eine Hochdruckkolbenpumpe (2) ist, und genannte Pumpe (2) eine Kolbenpumpe mit einer die Kolben antreibenden Taumelscheibe ist, **dadurch gekennzeichnet, dass** die Ankopplungsmittel zwischen der Pumpe (2) und dem Motor (M) einen direkt mit der Taumelscheibe der Pumpe verbundenen Freilauf umfassen.

2. Maschine nach Anspruch 1, **dadurch gekennzeichnet dass** die Taumelscheibe der Pumpe (2) ein ausgebohrtes Lager zum Aufnehmen des Freilaufes umfasst damit der genannte Freilauf der Pumpe 2 in der Taumelscheibe ein esetzt ist.

3. Maschine nach Anspruch 1 oder 2, **dadurch gekennzeichnet, dass** sie ein erstes Drucklager zwischen der Taumelscheibe und den Kolben der Pumpe (2) und ein zweites Drucklager in der Nähe des mit der genannten Taumelscheibe verbundenen Freilaufes umfasst.

4. Maschine nach einem der Ansprüche 1 bis 3, **dadurch gekennzeichnet, dass** die Ankopplungsmittel der ersten Vorrichtung (D1) eine Magnetkupplung umfassen.

5. Maschine nach einem der vorangehenden Ansprüche, **dadurch gekennzeichnet, dass** genannte erste Vorrichtung (1) ein Luftverdichter ist.

6. Maschine nach einem der vorangehenden Ansprüche, **dadurch gekennzeichnet, dass** genannte erste Vorrichtung (1) ein Staubsauger ist.

7. Maschine nach einem der vorangehenden Ansprüche, **dadurch gekennzeichnet, dass** die Ankopplungsmittel zwischen genannter erster Vorrichtung (1) und dem entsprechenden Endteil (A1) der Antriebswelle einen Riemenantrieb umfassen mit einem Riemen (4), der eine treibende Riemenscheibe (5) mit einer treibenden Riemenscheibe (6) verbindet, und einem Freilauf, der mit genannter treibender Riemenscheibe (5) verbunden ist.

## Revendications

1. Une machine à usage multiple comprenant un moteur électrique (M), un premier dispositif de travail (D1) et un deuxième dispositif de travail (D2) actionnés par ledit moteur (M), où ledit moteur (M) possède un arbre avec une première partie terminale (A1) et une deuxième partie terminale (A2) opposée à ladite première partie terminale (A1) auxquelles lesdits dispositifs sont respectivement connectés, où :
- le moteur (M) est connecté à des éléments (S) appropriés pour inverser la direction de rotation de l'arbre du moteur ;
- le premier dispositif (D1) est connecté à la première partie terminale de l'arbre du moteur (A1) grâce à un élément de couplage unidirectionnel (C1), transmettant le couple dans une première direction de rotation (R1) uniquement ;
- le deuxième dispositif (D2) est connecté à la deuxième partie terminale de l'arbre du moteur (A2) grâce à un autre élément de couplage unidirectionnel (C2), transmettant le couple dans le direction de rotation (R2) opposée à ladite première direction (R1),
et :
ledit deuxième dispositif de travail (D2) est une pompe à piston haute pression (2), et ladite pompe (2) est une pompe à piston avec une plaque oscillante qui actionne les pistons, **caractérisée par le fait que** les éléments de couplage entre la pompe (2) et le moteur (M) comprennent une roue libre directement associée à la plaque oscillante de la pompe.

2. Une machine selon la revendication 1, **caractérisée par le fait que** la plaque oscillante de la pompe (2) comprend un siège alésé pour le montage de la roue libre, de sorte que ladite roue libre de la pompe (2) soit insérée dans la plaque oscillante.

3. Une machine selon les revendications 1 et 2, **caractérisée par le fait qu'**elle comprend un premier palier de butée entre la plaque oscillante et les pistons de la pompe (2), et un deuxième palier de butée à côté de la roue libre associé à ladite plaque oscillante.

4. Une machine selon l'une des revendications 1 à 3, **caractérisée par le fait que** l'élément de couplage dudit premier dispositif (D1) comprend un embrayage magnétique.

5. Une machine selon l'une des revendications précédentes, **caractérisée par le fait que** ledit premier dispositif (1) est un compresseur d'air.

6. Une machine selon l'une des revendications précédentes, **caractérisée par le fait que** ledit premier dispositif (1) est un aspirateur.

7. Une machine selon l'une des revendications précédentes, **caractérisée par le fait que** l'élément de connexion entre ledit premier dispositif (1) et la partie terminale correspondante (A1) de l'arbre du moteur comprend une transmission à courroie avec une courroie (4) reliant une poulie motrice (5) à une poulie menée (6), et une roue libre qui est associée à ladite poulie motrice (5).
